# EUROPEAN PATENT APPLICATION

(11) **EP 1 009 180 A2**
(43) Date of publication of application: **14.06.2000**
(21) Application number: 99123944.3
(22) Date of filing: 03.12.1999
(51) Int. Cl.: H04Q 7/32

(54) **Traffic controlled wireless communication system**

(30) Priority: 08.12.1998 JP 34904798
(71) Applicant: NEC CORPORATION, Tokyo (JP)
(72) Inventor: Hirofumi, Yamagiwa, NEC Saitama, Ltd., Kamikawamachi, Kodama-gun, Saitama (JP)
(74) Representative: Baronetzky, Klaus, Dipl.-Ing.

(57) **Abstract**

A wireless communication system is composed of a base station(1) and a number of mobile stations(3). The mobile stations(3) communicate with the base station(1) through an up-link(5) and a down-link(4). One(3A,3B) of the mobile stations(3) issues a request(21,22,27,28) to the base station(1) to ask for permission to transmit a first signal(24,26). The base station(1) issues an answer(23,25) to grant permission to transmit the first signal(24,26) in response to the request(21,22,27,28). The one(3A,3B) of the mobile stations(3) transmits the first signal (24,26) when receiving the answer(23,25) in a waiting time. The waiting time can be modified.

## Description

### Background of the Invention

### 1. Field of the Invention

The present invention relates to a wireless communication system and a method for controlling the same. More particularly, the present invention relates to a wireless communication system and a method of the same, which is controlled according to traffic conditions

### 2. Description of the Related Art

In a wireless communication system, it is desired to use as less channels as possible for communications, because there are a limited number of available frequencies. The technology of controlling the wireless communication system using only a few channels has been focused increasingly.

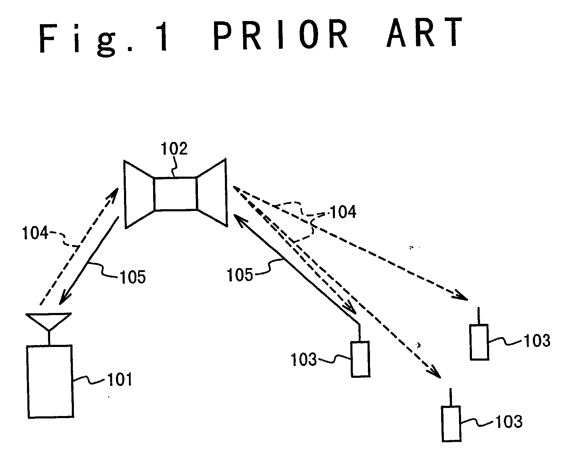

Fig. 1 illustrates the general structure of a conventional wireless communication system. Referring to Fig.1, the wireless communication system is composed of a base station 101, a satellite 102, and a plurality of mobile stations 103. The base station 101 communicates via the satellite 102 with the mobile stations 103. The base station 101 controls the operation of communication. The communications between the base station 101 and the mobile stations 103 are carried out via a down-link 104 and an up-link 105.

The down-link 104 is used for transmission of signals from the base station 101 to each mobile station 103. The base station 101 continually transmits information for controlling the communications to the mobile stations 103 via the down-link 104. The mobile stations 103 receive the information for controlling the communications from the down-link 104.

The up-link 105 is used for transmission of signals from one of the mobile stations 103 to the base station 101. The up-link 105 is shared by the mobile stations 103. When one of the mobile stations 103 communicates with the base station 101, the one occupies the up-link 105. Meanwhile, the other mobile stations 103 remain inaccessible to the up-link 105. The base station 101 determines which of the mobile stations 103 is allowed to occupy the up-link 105.

The communications through the down-link 104 and the up-link 105 involve transmission and receipt of burst signals of a certain format. The format of the burst signals will be explained later. Data to be transmitted is divided into a number of units which are segments of the data and allocated to the same number of the burst signals. The time base is also separated at intervals of a specific time. The time interval separated is called a frame. One frame carries one burst signal of the data. Accordingly, one unit of the data is transmitted in the single frame. It is assumed that when the transmission of the data requires only one burst signal, the signal is a short burst signal. When two or more burst signals are needed, the burst signals are termed a long burst signal. When the data to be transmitted is too bulky to be carried by a short burst signal, it can be transmitted by the long burst signal.

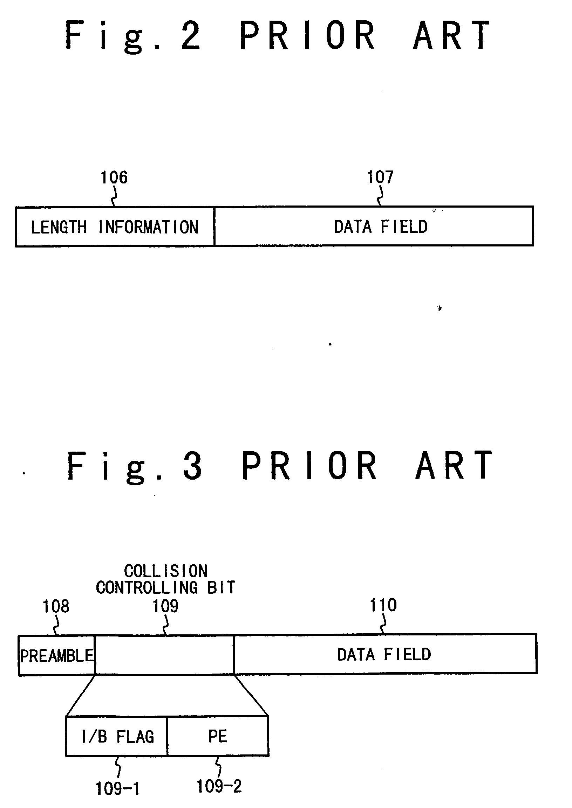

Fig. 2 illustrates a data format of the burst signal transmitted over the up-link 105. The burst signal format of the up-link 105 is composed of a length information 106 and a data field 107. The length information 106 indicates the number of units which are intended to be transmitted but have not been transmitted. The base station 101 reads the length information 106 to acknowledge whether transmission of a long burst signal is requested. The data field 107 holds the data to be transmitted from the mobile station 103.

Fig. 3 illustrates a data format of the burst signal transmitted over the down-link 104. The burst signal format for the down-link 104 is composed of a preamble 108 for synchronizing, collision controlling bits 109, and a data field 110 carrying data to be transmitted. The collision controlling bits 109 include an idle/busy flag (I/B flag) 109-1 and a partial echo signal (PE signal) 109-2. The I/B flag 109-1 is a signal indicative of permission of the transmission. When the base station 101 finds that a data is being received, it turns the I/B flag 109-1 to "B (busy)" to inhibit the access from any other mobile stations. The PE signal 109-2 is a signal indicative of permission of the transmission of a long burst signal. When the base station 101 finds a request for transmitting a long burst signal, it reserves a frame(s) of the up-link 105 for allowing the transmission of the long burst signal. Then it releases the PE signal 109-2 to permit the transmission of the long burst signal from a requesting mobile station 103.

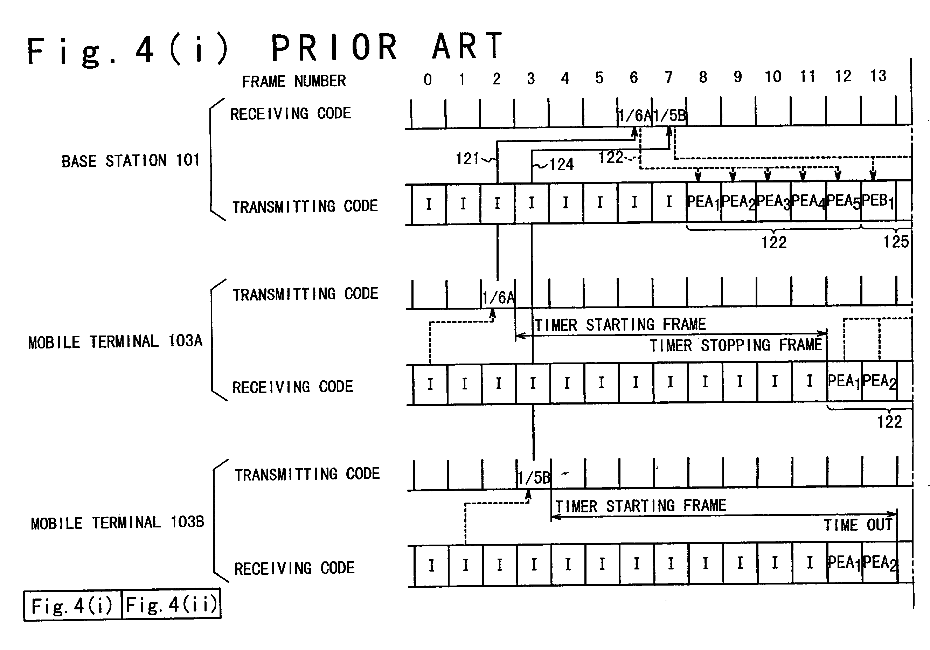

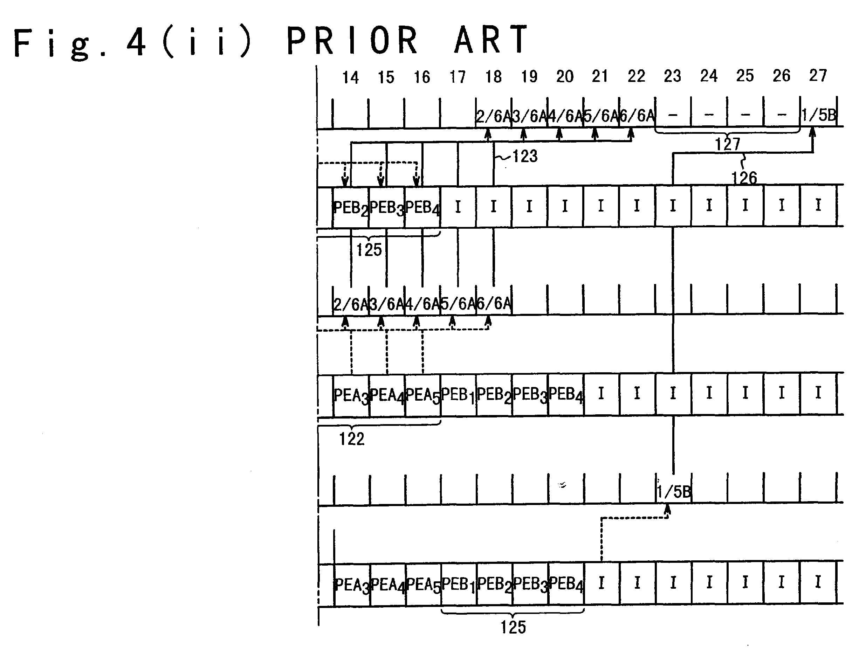

Fig. 4 illustrates a method of administrating the reservation of frames in the up-link 105. In such a long-distance communication system using a satellite 102, there is commonly produced a delay between the base station 101 and the mobile station 103. It is now presumed that the delay is four frames.

It is assumed that the mobile station 103A intends to transmit data which should be carried by six burst signals, as shown in Fig. 4. The mobile stations 103 monitor the I/B flag 110 in the collision controlling bits 109 transmitted over the down-link 104 from the base station 101. When the I/B flag 110 is "I" (permitting the transmission), the mobile stations 103 can transmit a short burst signal. The mobile station 103A detects that the I/B flag is 'I' at the frame 0. Then, the mobile station 103A transmits at the frame 2 a short burst signal 121 which carries a request for transmitting a long burst signal. The short burst signal 121 is represented by the symbol 1/6A. The base station 101 receives the short burst signal 121 from the mobile station 103A at the frame 6 and acknowledges from its length information 106 that the long burst signal is needed for transmitting the succeeding data. The base station 101 then reserves a number of the frames required for transmitting the long burst signal. This is followed by the base station 101 transmitting a PE signal 122 indicative of the reserved number of the frames (PEA1 to PEA5) to permit the transmission of the long burst signal. The mobile station 103A starts a timer after the transmission of the short burst signal 121. Before a predetermined waiting time has elapsed and the timer is timed up, the mobile station 103A waits for receiving the PE signal indicative of permission of transmitting the long burst signal.

The setting of the period on the timer is schemed for, in case that the transmission of the short burst signal fails, canceling the waiting for receiving the PE signal and repeating the transmission of the short burst signal. The period set in Fig. 4 is ten frames before the timeout. If the mobile station 103 does not receive the PE signal before the timeout, the mobile station 103 acknowledges that it fails to make a connection. Then, the mobile station 103 cancels the waiting for receiving the PE signal and repeats the transmission of the short burst signal. When the mobile station 103 receives the PE signal before the timeout, the mobile station 103 transmits the long burst signal corresponding to the PE signal.

In Fig. 4, the mobile station 103A receives a PE signal 122 before the timeout. The mobile station 103A then stops the timer and transmits a long burst signal 123. The n/6A shown in Fig. 4 stands for the long burst signals, where n is an integer ranging from 2 to 6. The symbol n/6A represents the nth of the six burst signals to be transmitted from the mobile station 103A.

In the wireless communications system employing the method of reserving and controlling the up-link 105, a problem may arise that the traffic on the up-link 105 accelerates as it increases. The reason is explained below.

As the traffic increases, the system become short of frames to which the long burst signal is assigned over the up-link 105. The frames will be available only when a considerable length of time has passed after the request for the long burst signal. More specifically, the mobile station 103 acknowledges that the connection is not made if the timer is timed up before the transmission of the long burst signal is permitted. Then, the mobile station 103 may repeat the transmission of the short burst signal to persist in the transmission of the long burst signal.

Also, the increase of the traffic may decline the transmission capability of the up-link 105. As the traffic increases, the timeout may incidentally occur during the waiting for the receipt of the PE signal. The timeout may leave some frames which are not eligible for the transmission.

The reason why the timeout results in declination of the transmission capability is now explained in conjunction with a substantial instance. It is assumed that the two mobile stations 103A and 103B transmit short burst signals 121 and 124 at the unit 6 and the unit 7 respectively for requesting the release of the long burst signal, as shown in Fig. 4. The timer is set to be timed up after ten frames. The up-link 105 allows the assignment according to a sequence of the short burst signals transmitted. In Fig. 4, the frames over the up-link 105 are allocated to the mobile station 103A and then to the mobile station 103B. The base station 101 delivers to the mobile station 103A the PE signal 122 for permitting the transmission of the long burst signal and then the PE signal 125 to the mobile station 103B. The mobile station 103B is not eligible to receive the PE signal within ten frames after the transmission of the short burst signal. This causes a timeout at the mobile station 103B. The mobile station 103B then gives up the transmission of the long burst signal and repeats the transmission of the short burst signal 126. However, the up-link 105 holds the frames 127 which are reserved for transmission of the long burst signal from the mobile station 103B. During the frames reserved for the long burst signal, the I/B signal remains at 'B'. Hence, the transmission of the short burst signal is inhibited and all the mobile stations including the mobile station 103B are disabled to make any transmission. More specifically, if the timeout occurs with the long burst signal being reserved, the transmission during the corresponding frames is disabled for all the mobile stations. As a result, the occurrence of the timeout impairs the transmission capability of the up-link 105.

It may be possible to increase a length of time before the timeout for retarding the timeout. With the length of time before the timeout being increased, if the transmission of the short burst signal fails, it takes an abundant of time before the mobile station 103 acknowledges that the connection is not made. Accordingly, the failure of communication will accelerate the declination of the transmission capability.

Conventionally, in Japanese Laid Open Patent Application (JP-A-Heisei 8-111886) is known a method of preventing the declination of the transmission capability resulting from increase of the traffic. The method disclosed in the citation provides setting of restrictive conditions for transmission corresponding to the traffic over control channels but fails to exhibit particular details of the conditions to be set. Therefore, the effectiveness of the method for the declination of the transmission capability will be unknown.

Also, Another method of controlling mobile stations corresponding to increase of the traffic is disclosed in Japanese Laid Open Patent Application (JP-A-Heisei 4-306925). The other method disclosed in the citation is however incapable of preventing the declination of the transmission capability resulting from the increase of the traffic.

### Summary of the Invention

The present invention is made in the light of the above-mentioned circumstances. Therefore, an object of the present invention is to provide a wireless communication system and a method of controlling the same, which is adequately controlled according to the conditions of the system.

Another object of the present invention is to provide a wireless communication system and a method of the same which avoid increase in the traffic of the links caused by the increase itself.

Still another object of the present invention is to provide a wireless communication system and a method of the same which prevent decline of the transmission capacity of the links caused by the increase in the traffic.

Yet still another object of the present invention is to provide a wireless communication system and a method of controlling the same, which is controlled according to the traffic.

It is also an object of the present invention to provide a wireless communication system and a method of controlling the same, which is controlled according to the time of operation.

It is another object of the present invention to provide a wireless communication system and a method of controlling the same, which is controlled according to the length of signals transmitted by mobile stations.

In order to achieve an aspect of the present invention, A wireless communication system is composed of a base station and a plurality of mobile stations which communicate with the base station through links. One of the plurality of mobile stations issues a request to the base station to ask for permission to transmit a first signal. The base station issues an answer to grant permission to transmit the first signal in response to the request. The mobile station transmits the first signal when receiving the answer in a waiting time. The waiting time can be modified.

The base station decides the length of the waiting time and informs each of the mobile stations of the length of the waiting time. The length of the waiting time may depend on the traffic of the links.

The base station may monitor the traffic of the links at regular intervals, and sets the length of the waiting time to a first length when the traffic is less than a standard, and the length of the waiting time to a second length when the traffic is heavier than the standard.

The second length may be defined according to the traffic.

The length of the waiting time depends on the time when the communication is executed

The length of the waiting time may depend on the lengths of data transmitted by the mobile stations.

The base station may determine the average length of data transmitted by the mobile stations. The base station sets the length of the waiting time to a first length when the average length is shorter than a standard. The base station sets the length of the waiting time to a second length when the average length is longer than the standard.

The second length may be defined according to the average.

In order to achieve another aspect of the invention, A method of controlling a wireless communication system including a base station and a plurality of mobile stations which communicate with each other through links is composed of issuing a request from one of the mobile stations to a base station to ask for permission to transmit a first signal, issuing an answer to the requesting mobile station to grant permission to transmit the first signal, issuing the first signal to the base station when the requesting mobile station receives the answer in a waiting time. The length of the waiting time can be modified.

The method may be further composed of deciding the length of the waiting time and informing each of the mobile stations of the length of the waiting time.

The method may be further composed of monitoring the traffic of the links, and the length of the waiting time is decided according to the traffic of the links.

### Brief Description of the Drawings

Fig. 1 illustrates a general structure of a conventional wireless communication system;
Fig. 2 illustrates a format of a burst signal on an up-link 105;
Fig. 3 illustrates a format of a burst signal on a down-link 104;
Figs. 4(i) and 4(ii) illustrates a method of controlling the frame reservation on the up-link 105;
Fig. 5 is a view showing an arrangement of a wireless communication system according to the present invention;
Fig. 6 illustrates a format of a burst signal on an up-link 5;
Fig. 7 illustrates a format of a burst signal on a down-link 4;
Fig. 8 illustrates an arrangement of a base station 1 in the wireless communication system of the present invention;
Figs. 9(i) and 9(ii) illustrates communications between the base station 1 and mobile stations 3 in the wireless communication system of the present invention, showing transmission and receipt of signals during a period when the traffic on the up-link 5 is greater than a given level;
Figs. 10(i) and 10(ii) shows the same during a period when the traffic on the up-link 4 is smaller than the given level;
Fig. 11 is a flowchart of process steps conducted by the base station 1 for connecting between the base station 1 and each mobile station 3;
Fig. 12 illustrates a flow of process steps of the mobile station 3 for transmission and receipt;
Fig. 13 is a flowchart of process steps conducted by the base station 11 in a wireless communication system according to a second embodiment of the present invention;
Fig. 14 is a flowchart of process steps conducted by the base station 1 in a wireless communication system according to a third embodiment of the present invention; and
Fig. 15 is a flowchart of process steps conducted by the base station 1 in a wireless communication system according to a fourth embodiment of the present invention.

### Description of the Preferred Embodiments

A wireless communication system of the present invention will be described below in detail with reference to the accompanying drawings.

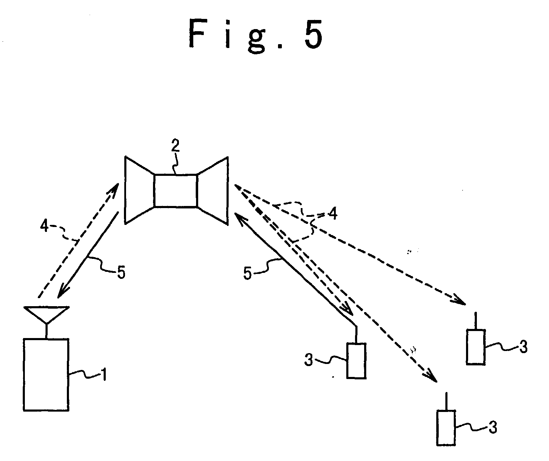

A first embodiment of the present invention is composed of a base station, a satellite, and a number of mobile stations. As shown in Fig. 5, communications between the base station 1 and each mobile station 3 are carried out via the satellite 2. The base station 1 is linked to the mobile stations 3 by a down-link 4 and an up-link 5. The down-link 4 is used for communication from the base station 1 to the mobile stations 3. The base station 1 continuously transmits information about communication control via the down-link 4 to the mobile stations 3. The mobile stations 3 continuously receive the information about communication control from the down-link 4. The up-link 5 is shared by the mobile stations 3. When one of the mobile stations 3 intends to communicate, it occupies the up-link 5. The base station 1 determines which of the mobile stations 3 is permitted to occupy the up-link 5.

The exchange of data is carried out by transmitting and receiving burst signals of a specific format. The format of the burst signal will be explained later. The data to be transmitted is divided into units which are segments of the data and carried by the same number of the burst signals as of the units. The time base is divided into uniform intervals which are called frames. In one frame, one burst of the data is transmitted. More particularly, one unit of the data is transmitted in a frame. It should be noted that a signal for carrying one burst of the data to be transmitted is the short burst signal and a signal for carrying two or more bursts is the long burst signal. When the data is greater than one unit and not carried by the short burst signal, it can be transmitted in the form of the long burst signal.

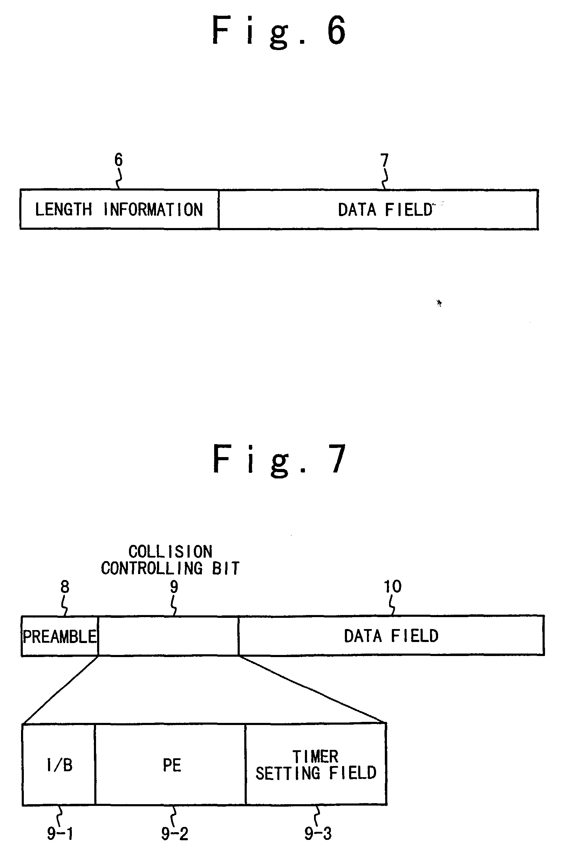

Fig. 6 illustrates a structure of the burst signal on the up-link 5. The burst signal on the up-link 5 includes a length information 6 and a data field 7 for carrying the data to be transmitted. The length information 6 is the number of remaining units to be transmitted. The base station 1 reads the length information 6 to know a request for transmitting the burst signal.

Fig. 7 illustrates a format of the burst signal on the down-link 4. The burst signal on the down-link 4 is composed of a preamble 8 for synchronization, a collision controlling bit 9, and a data field 10.

The collision controlling bit 9 includes an I/B flag 9-1, a PE signal 9-2, and a timer setting field 9-3. The I/B flag 9-1 determines whether the use of the up-link 5 by the mobile station 3 is permitted or inhibited. The PE signal 9-2 determines the mobile station 3 to be permitted for transmitting the long burst signal. When the I/B flag 9-1 is at the "B (busy)" state, the mobile station 3 permitted with the PE signal 9-2 can transmit the long burst signal over the up-link 5. The timer setting field 9-3 contains a waiting time to be set on the timer of the mobile stations 103. The waiting time controls the transmitting and receiving actions of the mobile stations. The controlling with the waiting time is explicitly explained below.

When the mobile station 3 intends to transmit the long burst signal, it sends a short burst signal carrying a request for transmitting the long burst signal. When the mobile station 3 receives within a waiting time from the base station 1 an answer indicating that the transmission of the long burst signal is allowed, it transmits the long burst signal. The waiting time at the mobile station 3 is determined from the waiting time of the timer setting field 9-3 contained in the received signal. The data of the timer setting field 9-3 may be modified. For example, when the traffic is greater than an expected level, the time setting is 20 frames. When smaller, the time setting is 10 frames. As the traffic increases, the waiting time is increased. The smaller the traffic, the shorter will be the waiting time.

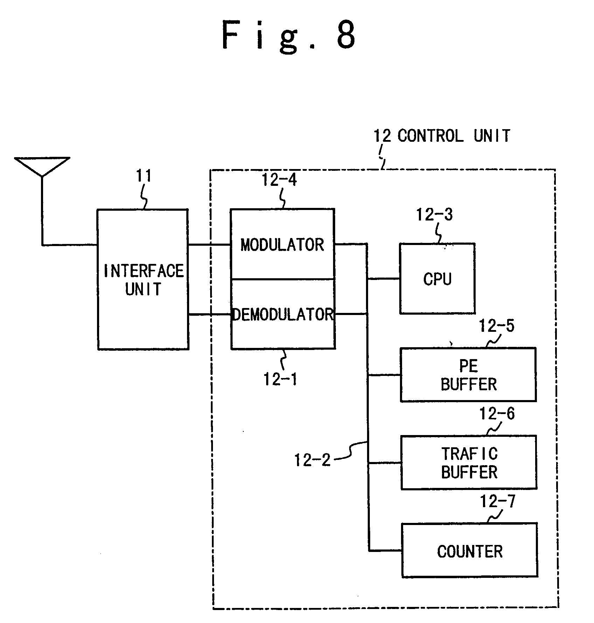

Fig. 8 illustrates an arrangement of the base station 1. The base station 1 includes a interface unit 14 and a control unit 15. The interface unit 14 receives the signal via the up-link 4 from the mobile station 3 and transfers its data to the control unit 15. Also, the interface unit 14 receives a data to be transmitted from the control unit 15 and transmits it via the down-link 5 to the mobile station 3.

The control unit 15 is composed of a demodulator 12-1, a data bus 12-2, a CPU (central processing unit) 12-3, a modulator 12-4, a PE signal buffer 12-5, a traffic buffer 12-6, and a counter 12-7. The demodulator 12-1 demodulates the burst signal received from the up-link 5 by the interface unit 14 and transfers it to the CPU 12-3. The CPU 12-3 controls the entire wireless communication system. One of its controlling actions is to give the mobile station 3 a permission for the signal transmission. More specifically, it is judged from the length information 6 in the received data whether or not the request for transmitting the long burst signal is made by the mobile station 3. When the request is made, a corresponding burst signal is produced which includes the PE signal 12 for permitting the transmission of the long burst signal. The PE signal 12 is then transferred to the PE buffer 12-4. The PE buffer 12-4 saves the PE signal 12. The traffic buffer 12-6 saves an accumulated number of the frames demanded for transmission of the long burst signal. The accumulated number of the frames saved in the traffic buffer 12-6 is used by the CPU 12-3 for judging the traffic. The counter 12-7 determines intervals of a constant time for calculating the traffic; in this embodiment, the interval is 100 frames.

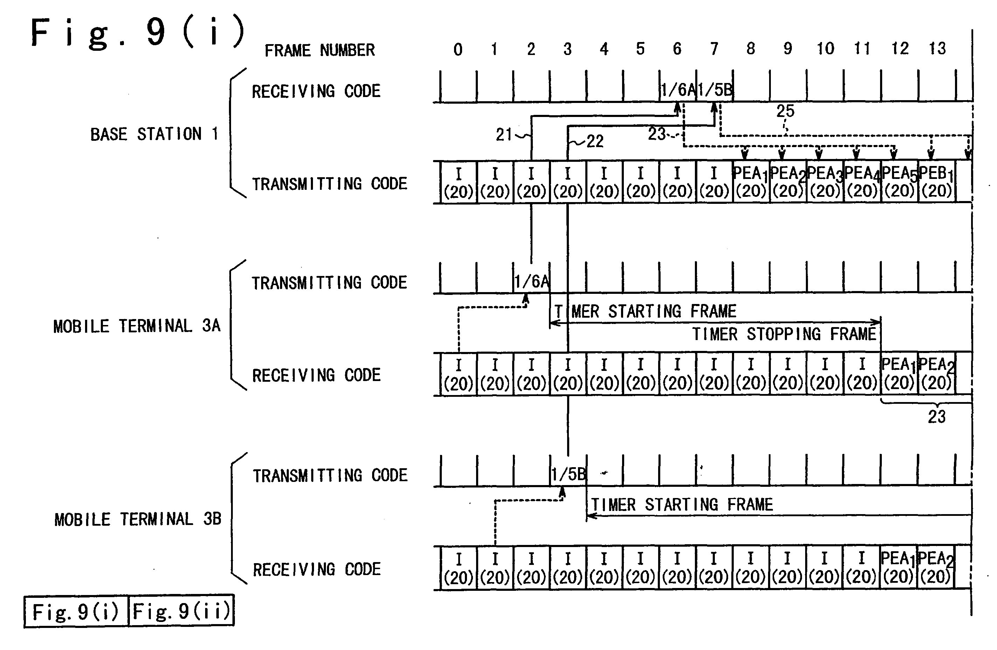

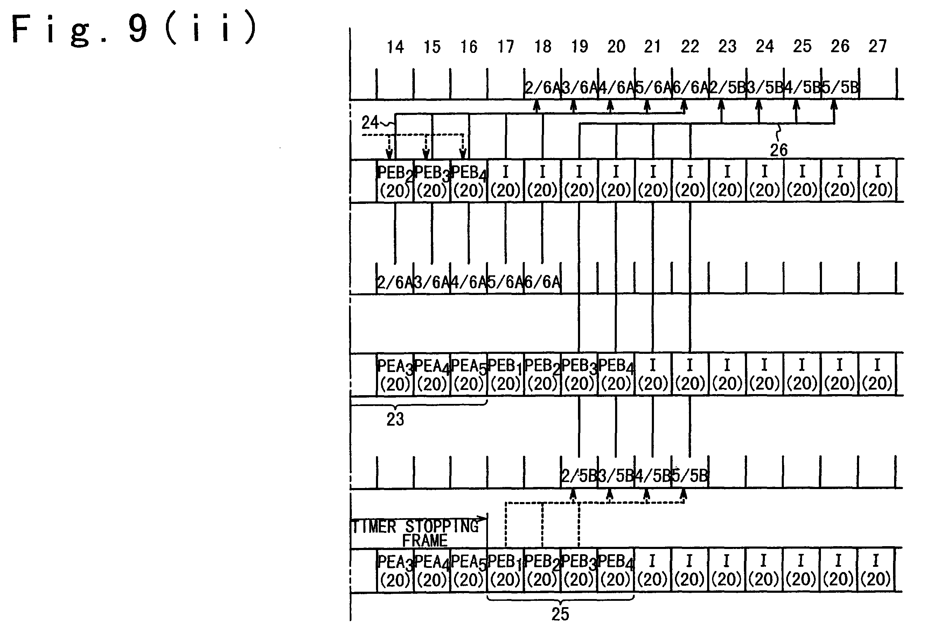

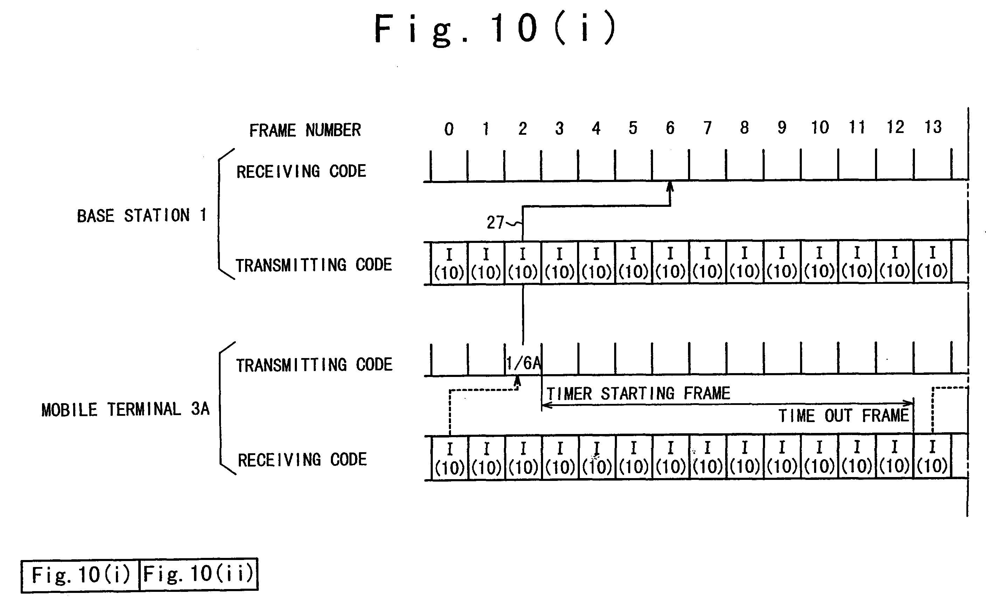

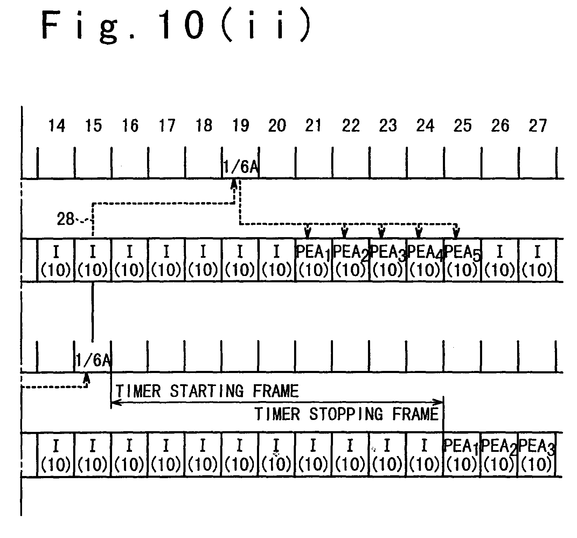

Figs. 9 and 10 illustrate the communications between the base station 1 and the mobile station 3 in the wireless communication system of the embodiment. As shown in Figs. 9 and 10, a delay in the communication from the base station 1 to the mobile station 3 extends four frames in one way. In. Figs. 9 and 10, the waiting times carried by the timer setting field 9-3 are indicated in the numbers of brackets shown in the transmitting and receiving codes.

Fig. 9 shows a transmission and receipt sequence of signals during a time when the traffic on the up-link 5 is heavier than a predetermined level. In that case, the waiting time for waiting the permission of transmitting the long burst signal is 20 frames). It is assumed as shown in Fig. 9 that the mobile station 3A intends to transmit a short burst signal 21 for requesting the transmission of a long burst signal in the frame 2 while the mobile station 3B intends to transmit a short burst signal 22 for requesting the transmission of a long burst signal in the frame 3. When the traffic is heavy, a number of requests for transmitting the long burst signal are released one after another. This example is based on such a case.

The reservation of frames for transmitting the long burst signal is made corresponding to an order of the released requests. More precisely, five frames requested by the mobile station 3A are first reserved on the up-link 5 and then, four frames requested by the mobile station 3B are reserved. The base station 1 then transmits to the mobile station 3A in the frame 8 a PE signal 23 permitting the transmission of a long burst signal. Upon receiving the PE signal 23, the mobile station 3A transmits a long burst signal 24. In succession, the base station 1 transmits to the mobile station 3B in the frame 13 a PE signal 24 permitting the transmission of a long burst signal. The mobile station 3B receives at the frame 17 the PE signal 24 permitting the long burst signal. The frame 17 is set before the mobile station 3B is timed up. This allows the mobile station 3B to transmit a long burst signal 26 without occurrence of the timeout.

As described, when the traffic is heavier than the predetermined level, the waiting time is increased to retard the timeout on the mobile station 3. As the occurrence of the timeout is controlled, the increase of the traffic resulting from repeat of the transmission of the short burst signal will be avoided. Also, it will be avoided that the occurrence of the timeout results in making some frames not eligible for transmission.

Fig. 10 illustrates transmission and receipt of signals during a time when the traffic on the up-link 4 is less than the predetermined level. In this case, the waiting time for waiting the permission of transmitting the long burst signal is ten frames.

At the frame 2, the mobile station 3A releases a short burst signal 27 indicative of a request for transmission of a long burst signal. It is now assumed that the request is not received by the base station 1. The mobile station 3A upon releasing the short burst signal 27 starts the timer. The time setting field 9-3 announces a timeout after ten frames. This permits, in the frame 15, the transmission of a short burst signal 28 indicative of repeating the request for transmitting the long burst signal. Accordingly, when the traffic is less than the predetermined level, the waiting time is decreased to inform readily that the request is not received, thus minimizing the declination of the transmission capability.

Although the waiting time is determined depending on the traffic in the embodiment, it may be sized by time-dependent attributes of the communications without measuring the traffic. While the traffic in a particular period of time is estimated from experience, the waiting time determined by the time-dependent attributes can be employed with equal success.

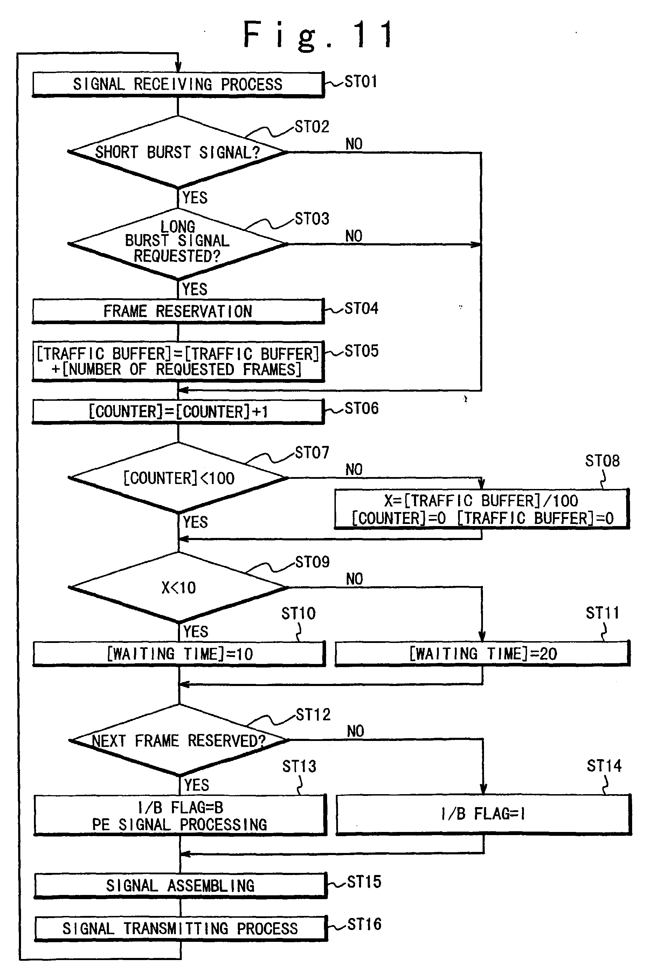

Fig. 11 is a flowchart of steps carried out by the base station 1 for communication between the base station 1 and the mobile stations 3, illustrating particularly a procedure of determining the waiting time. The procedure starts with the base station 1 receiving a signal from a mobile station 3 (ST01). It is then examined whether the received signal is a short burst signal or not (ST02). When the received signal is a short burst signal, it is examined whether the request for transmitting a long burst signal is released or not (ST03). When the request for transmitting a long burst signal is released, corresponding frames on the up-link 105 are reserved for transmission of the long burst signal (ST04). The number of the frames reserved for transmission of the long burst signal is added to the accumulated number of frames saved in the traffic buffer 12-6 (ST05). If the received signal is either a long burst signal or a short burst signal requesting no transmission of a long burst signal, the generation of a PE signal (ST04) and the addition of the number of the frames (ST05) are not executed but the procedure jumps to the following steps.

The addition by 1 on the counter 12-7 follows (ST06). It is then examined whether the counter 12-7 counts up 100 or not (ST07). When the counter 12-7 is 100, the traffic level X is calculated from the contents of the traffic buffer 12-6 and then, both the traffic buffer 12-6 and the counter 12-7 are reset to zero (ST08). By carrying out the above steps, the traffic for every 100 frames is determined. The traffic level X calculated from the contents of the traffic buffer 12-6 may be set by dividing the accumulated number of frames by 100, i.e. the number of frames in a long burst signal required for transmission in one frame. The traffic level X may be determined by any other definition.

It is then examined whether or not the traffic level X is smaller than a reference level (ST09). The reference level is 10 (frames) in the embodiment. The reference level may arbitrarily be determined. When the traffic level X is smaller than the reference level, the waiting time in the timer setting 9-3 is set to 10 (frames) (ST10). If the traffic level X is not smaller than the reference level, the waiting time in the timer setting 9-3 is set to 20 (frames) (ST11).

It is then examined whether the succeeding frame is reserved or not (ST12). When the succeeding frames are reserved, the I/B flag is set to 'B' and the PE signal 9-2 for permitting the transmission of a long burst signal is produced (ST13). If the frames are not reserved, the I/B flag is set to 'I' (ST14). This is followed by assembling a burst signal to be transmitted (ST15) and transmitting the same (ST16) .

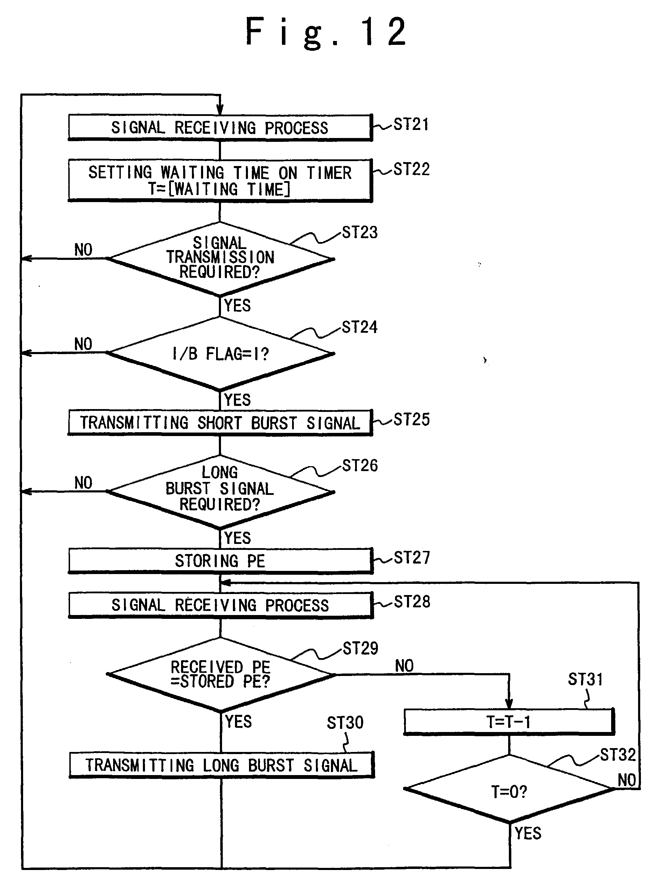

Fig. 12 illustrates steps of transmission and receipt of signal at the mobile station 3. The mobile station 3 receives a signal from the base station 1 (ST21). The waiting time contained in the timer setting field 9-3 is installed in a timer of the mobile station 3 (ST22). It is then examined whether or not there is data to be transmitted from the mobile station 3 (ST23). If no data transmission is required, the mobile station 3 is turned back to a receiving mode (ST21). When transmission of the data is required, the I/B flag 9-1 contained in the received signal is examined (ST24). If the I/B flag is at 'B', the mobile station 3 returns back to its receiving mode (ST21). When the I/B flag is at 'I', the mobile station 3 transmits a short burst signal (ST25). If transmission of a long burst signal is not required, the communicating action stops and the mobile station 3 returns back to its receiving mode (ST21). When transmission of a long burst signal is required, the mobile station 3 saves in its memory data of a PE signal 9-2 indicative of permitting the transmission of the long burst signal (ST27). For receiving the permission of transmitting the long burst signal, the mobile station 3 starts its receiving mode (ST28). The PE signal received is then compared with the PE signal saved in the memory to determine whether the received PE signal indicates the permission of transmitting the long burst signal from the mobile station 3 (ST29). When the received PE signal indicates the permission of transmitting the long burst signal, the mobile station 3 starts transmission of the long burst signal (ST30). If not, the timer (T) in the mobile station 3 is subtracted by one (ST31). It is then examined whether or not the timer is counted down to zero (ST32). When the timer is counted down to zero, it is acknowledged that the transmission fails and the procedure goes back to ST21 for repeating the transmission of the short burst signal. If the time is not zero, the mobile station 3 starts its receiving mode for receiving the permission of transmitting the long burst signal (ST28).

In the mobile station 3 carrying out the above steps, the waiting time on the timer is variable and determined by the base station 1. This allows the transmitting and receiving actions to be conducted corresponding to the traffic on the communication lines.

In the embodiment, the calculation of the traffic X, the interval of calculating the traffic, and the waiting time are not limited to those defined in this specification. Also, the invention is applicable to any other wireless communication system with no use of the satellite 2.

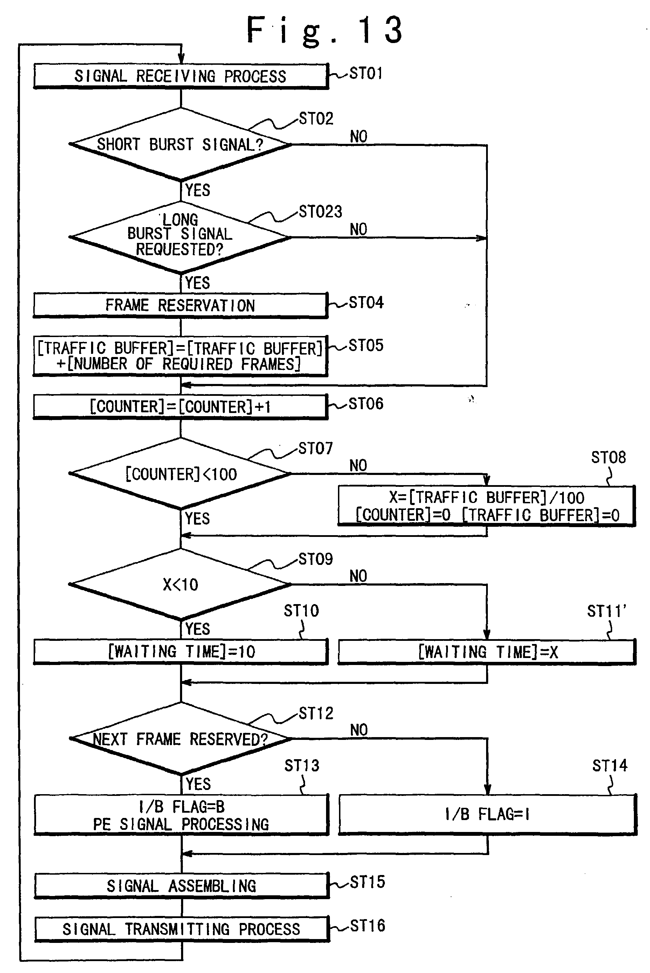

A second embodiment of the wireless communication system of the present invention is almost identical in the arrangement to the first embodiment. It is differentiated by the fact that the step for determining the waiting time is modified. Fig. 13 is a flowchart of the base station 1 in the wireless communication system showing the second embodiment. In this embodiment, when the traffic level X is smaller than the reference level, the waiting time is ten (frames). When the traffic level X is not smaller than the reference level, the waiting time is equal to the traffic level X. It is noted that the traffic level X is defined based on the number of frames in the long burst signal which are required for transmission in one frame.

In the wireless communication system of the second embodiment, the sequence of transmission and receipt of signals at the base station 1 and the mobile stations 3 is identical to that of the wireless communication system of the first embodiment except the step of defining the waiting time. Also, a sequence of transmitting and receiving operations in the mobile stations 3 of the second embodiment is substantially similar to that of the first embodiment.

The traffic level X may be determined by any other appropriate definition. The waiting time in the timer setting field 9-3 when the traffic is smaller than the reference level may be modified. Moreover, the waiting time when the traffic is not smaller than the reference level may be determined by any other proper method where the traffic level X is a variable.

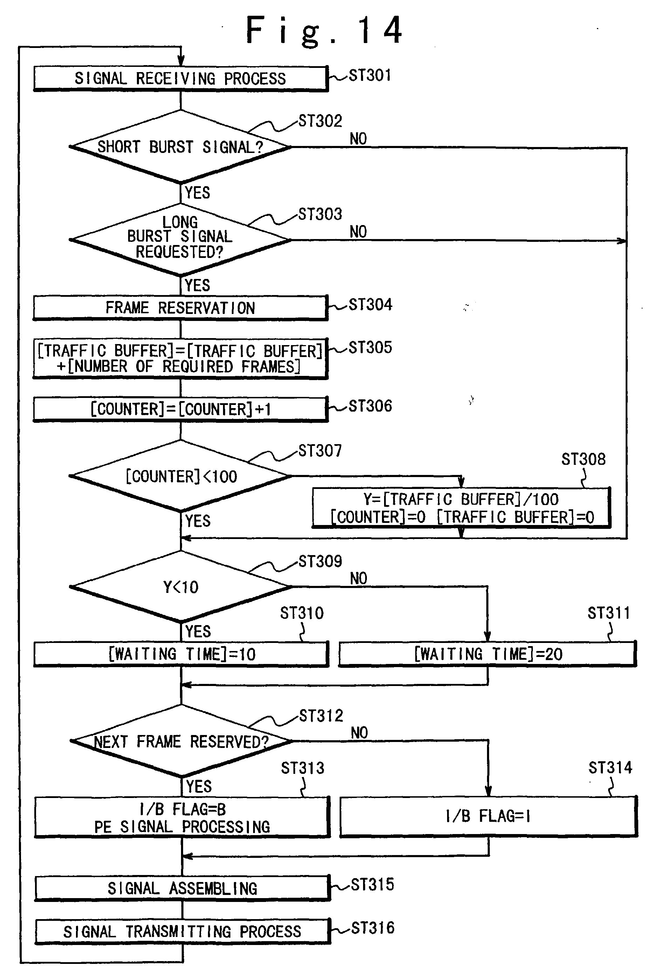

A third embodiment of the wireless communication system according to the present invention has an arrangement similar to that of the wireless communication system of the previous embodiment. It is differentiated by the fact that the action of the base station 1 is modified.
More particularly, the waiting time in the timer setting field 9-3 is determined by another means. Fig. 14 is a flowchart showing a procedure of actions of the base station 1 in the wireless communication system of this embodiment.

The procedure starts with the base station 1 receiving a signal from a mobile station 3 (ST301). It is then examined whether the received signal is a short burst signal or not (ST302). When the received signal is a short burst signal, it is examined whether or not the transmission of a long burst signal is requested (ST303).

When the short burst signal indicates that the transmission of a long burst signal is requested, the following steps are carried out. Corresponding frames on the up-link 105 are reserved for transmission of the long burst signal (ST304). The number of the frames reserved is added to the accumulated number of frames saved in the traffic buffer 12-6 for transmitting the long burst signal (ST305). This is followed by adding by one on the counter 12-7 (ST306). It is then examined whether or not the counter 12-7 is counted up to 100 or not (ST307). When the counter 12-7 is counted up to 100, an average Y on the number of frames required by the short burst signal for transmitting the long burst signal is calculated from the contents of the traffic buffer 12-6. Both the traffic buffer 12-6 and the counter 12-7 are then reset to zero (ST308). By conducting the above steps, the average Y is determined at every 100 requests for the long burst signal.

When the received signal is a long burst signal or a short burst signal which indicates no request of transmission of a long burst signal, a group of the steps from reservation of some frames for transmitting a long burst signal (ST304) to calculation of the average Y (ST308) are not executed.

It is then examined whether the average Y is smaller than a reference level or not (ST309). The reference level in this embodiment is 10 (frames). The reference level may arbitrarily be modified. When the average Y is smaller than the reference level, the waiting time of the timer setting field 9-3 distributed to the mobile stations 3 is set to 10 (frames) (ST310). When the average Y is not smaller than the reference level, the waiting time of the timer setting 9-3 is set to 20 (frames) (ST311). When the average Y is not smaller than the reference level, the average Y may be assigned as the waiting time of the timer setting field 9-3.

It is then examined whether or not the succeeding frames are reserved (ST312). When they are reserved, the I/B flag is set to 'B' and a PE signal 9-2 indicative of permitting the transmission of a long burst signal is produced (ST313). If not, the I/B flag is set to 'I' (ST14). Then, a burst signal to be transmitted is assembled (ST315) and transmitted (ST316).

The wireless communication system of this embodiment can control the transmitting and receiving actions corresponding to the length of data to be exchanged over the system.

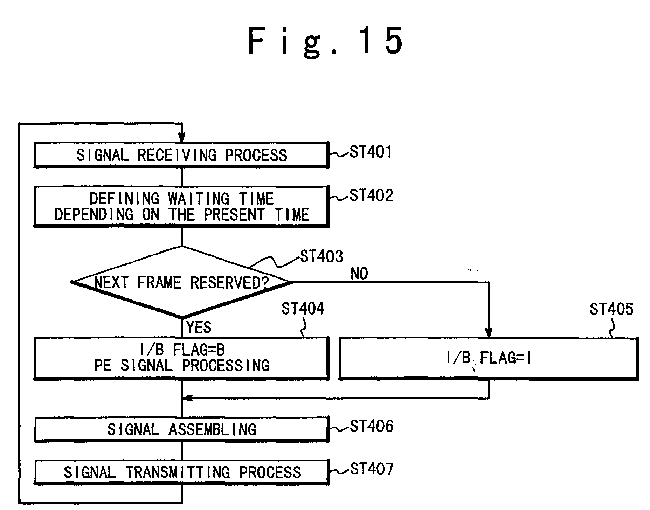

A fourth embodiment of the wireless communication system of the present invention is substantially identical in the arrangement to the previous embodiment of the wireless communication system. It is differentiated by the fact that the action of the base station 1 is modified. More specifically, the waiting time is determined by another means. Fig. 15 is a flowchart showing a procedure of actions of the base station 1 in the wireless communication system of this embodiment.

The procedure starts with the base station 1 receiving a signal from one mobile station 3 (ST401). Then, the waiting time is determined depending on a processing period of time (ST402). For example, when the processing period is at high traffic, the waiting time is lengthened. When the processing period is at low traffic, the waiting time is shortened. It is then examined whether or not the succeeding frames are reserved (ST403). When the succeeding frames are reserved, the I/B flag is set to 'B' and a PE signal 9-2 indicative of permitting the transmission of a long burst signal is produced (ST404). If not, the I/B flag is set to 'I' (ST405). This is followed by assembling a burst signal to be transmitted (ST405) and transmitting the same (ST406).

In the wireless communication system of this embodiment, the waiting time is determined while the traffic is not being monitored. Instead, the wireless communication system of this embodiment obtains and uses information about a change in the traffic depending on the time to determine the waiting time at a particular period, hence providing optimum controlling actions on the wireless communications with simple operation.

The first effect of the present invention is in that increase in the traffic by the increase itself can be reduced, by modifying the waiting time according to the conditions of the system. This is because it reduces the timeout of the timer in the mobile stations and prevents the mobile stations from transmitting repetitive requests to the base station.

The second effect of the present invention is in that decline of the transmission capacity caused by the increase in the traffic can be avoided, by modifying the waiting time according to the conditions of the system. This is because it prevents the timeout and decreases the number of frames ineligible for the transmission of signals.

Although the invention has been described in its preferred form with a certain degree of particularity, it is understood that the present disclosure of the preferred form has been changed in the details of construction and the combination and arrangement of parts may be resorted to without departing from the spirit and the scope of the invention as hereinafter claimed.

## Claims

1. A wireless communication system comprising:
a base station(1); and
a plurality of mobile stations(3) which communicate with said base station(1) through an up-link(5) and a down-link(4), wherein one of said plurality of mobile stations(3) issues a request(21,22,27,28) to said base station(1) to ask for permission to transmit a first signal(24,26) and said base station(1) issues an answer(23,25) to grant permission to transmit said first signal(24,26) in response to said request(21,22,27,28), and said mobile station(3) transmits said first signal(24,26) when said mobile station(3) receives said answer(23,25) in a waiting time, and length of said waiting time can be modified.

2. A wireless communication system according to claim 1, wherein said base station(1) decides said length of said waiting time and informs each of said plurality of mobile stations(3) of said length of said waiting time.

3. A wireless communication system according to claim 2, wherein said length of said waiting time depends on traffic of said up-link(5).

4. A wireless communication system according to claim 3, wherein said base station(3) monitors said traffic of said up-link(5) at regular time intervals, and sets said length of said waiting time to a first length when said traffic is less than a reference value, and sets said length of said waiting time to a second length when said traffic is more than said reference value.

5. A wireless communication system according to claim 4, wherein said second length is defined based on said traffic.

6. A wireless communication system according to claim 2, wherein said length of said waiting time depends on time when communication is executed.

7. A wireless communication system according to claim 2, wherein said length of said waiting time depends on lengths of signals transmitted by said plurality of mobile stations(3).

8. A wireless communication system according to claim 7, wherein said base station(1) determines average of said lengths of signals transmitted by said plurality of mobile stations(3), and set said length of said waiting time to a first length when said average is smaller than a reference value, and set said length of said waiting time to a second length when said average is larger than said reference value.

9. A wireless communication system according to claim 8, wherein said second length is defined based on said average.

10. A method of controlling a wireless communication system including a base station(1) and a plurality of mobile stations(3) which communicate with said base station(1) through an up-link(5) and a down-link(4), comprising:
issuing a request(21,22,27,28) from one(3A,3B) of said plurality of mobile stations(3) to said base station(1) to ask for permission to transmit a first signal(24,26) ;
issuing an answer(23,25) to said one(3A,3B) of said plurality of mobile stations(3) to grant permission to transmit said first signal(24,26); and
issuing said first signal(24,26) to said base station when said one(3A,3B) of said plurality of mobile stations(3) receives said answer(23,25) in a waiting time, wherein length of said waiting time can be modified.

11. A method according to claim 10, further comprising:
defining said length of said waiting time; and
informing each of said plurality of mobile stations(3) of said length of said waiting time.

12. A method according to claim 11, further comprising:
monitoring traffic of said up-link(5),
wherein said length of said waiting time is defined based on said traffic of said up-link(5).

13. A method according to claim 12, wherein said length of said waiting time is set to a first length when said traffic is less than a reference value, and said length of said waiting time is set to a second length when said traffic is larger than said reference value.

14. A method according to claim 13, wherein said second length is defined based on said traffic.

15. A method according to claim 11, wherein said length of said waiting time depends on time when communication is executed.

16. A method according to claim 11, wherein said length of said waiting time is defined based on lengths of signals issued by said plurality of mobile stations(3).

17. A method of wireless communication according to claim 16, further comprising:
determining average of said lengths of said signals, wherein said length of said waiting time is set to a first length when said average is smaller than a reference value, and is set to a second length when said average is larger than said reference value.

18. A method of wireless communication according to claim 17, wherein said second length depends on said average.

19. A base station(1) used in a wireless communication system including said base station(1) and a plurality of mobile stations(3), wherein said base station(1) grants one(3A,3B) of said plurality of mobile stations(3) a permission(23,25) to transmit a first signal(24,26) when said one (3A,3B) of plurality of mobile stations(3) requests to transmit said first signal(24,26) and determines a length of a waiting time and informs said plurality of mobile stations(3) of said length of said waiting time in which said one(3A,3B) of said plurality of mobile stations(3) transmits a first signal(24,26) to said base station(1) after being permitted to transmit said first signal(24,26), and length of said waiting time can be modified.

20. A base station(1) according to claim 19, wherein said base station(1) monitors traffic of an up-link(5) from said mobile stations(3) to said base station(1), and defines said length of said waiting time based on said traffic.

21. a mobile station(3A,3B) used in a wireless communication system including said base station(1) and a plurality of mobile stations(3), wherein said mobile station(3A,3B) transmits a first signal(24,26) when said mobile station(3A,3B) is permitted to transmit said first signal(24,26) in a waiting time after transmitting a request(21,22,27,28) to be permitted to transmit said first signal(24,26), and length of said waiting time can be modified.

22. a mobile station according to claim 21, wherein said length of said waiting time is defined based on traffic of an up-link(5) from said plurality of mobile stations(3) to said base station(1).
